**Europäisches Patentamt**

**European Patent Office**

**Office européen des brevets**

(11) Veröffentlichungsnummer: **0 051 250**
**A1**

(12) **EUROPÄISCHE PATENTANMELDUNG**

(21) Anmeldenummer: **81108998.6**

(22) Anmeldetag: **27.10.81**

(51) Int. Cl.³: **B 22 D 11/126**
**B 23 K 7/10**

(30) Priorität: **31.10.80 DE 3041043**
**24.01.81 DE 3102364**

(43) Veröffentlichungstag der Anmeldung:
**12.05.82 Patentblatt 82/19**

(84) Benannte Vertragsstaaten:
**AT FR GB IT**

(71) Anmelder: **SACK GMBH**
**Wahlerstrasse 2**
**D-4000 Düsseldorf-Rath(DE)**

(71) Anmelder: **BFI Betriebstechnik GmbH**
**Sohnstrasse 65**
**D-4000 Düsseldorf 1(DE)**

(72) Erfinder: **Ramm, Günter, Ing.-grad.**
**Ahornstrasse 9**
**D-4030 Ratingen 8(DE)**

(72) Erfinder: **Haering, Hans Ulrich, Ing.-grad.**
**Erbenhäuschen 71**
**D-5650 Solingen(DE)**

(74) Vertreter: **Boecker, Carl Otto, Dipl.-Ing.**
**Ensheimer Strasse 48**
**D-6670 St.Ingbert-Saar(DE)**

(54) **Brennschneidmaschine mit Schallschutzvorrichtung.**

(57) Zur Schalldämmung des von Schneidbrennern (7) einer verfahrbaren Brennschneidmaschine (1) beim Querteilen von Stranggußbrammen (3) erzeugten Lärms ist an die Brennschneidmaschine über eine Kupplung (K) ein kastenartiges Schallschutzgehäuse (11) mitwandernd verbindbar, das nach unten offen ist und zumindest die sich bewegende Bramme und damit die Lärmquelle umfassend abdeckt. Für die Querbewegung der Brenner während eines Trennschnittes ist in der Deckplatte (13) des Schallschutzgehäuses eine schlitzartige Öffnung (17) freigelassen. Zum Abschluß der stirnseitigen Öffnungen des Schallschutzgehäuses sind mit Rücksicht auf den Eintritt der Bramme Stirnwände (16) mit dem Strang entsprechenden Aussparungen, oder eine Vielzahl von Schwenkklappen (25) oder Kettenschürzen (27) vorgesehen.

FIG.1

EP 0 051 250 A1

- 1 -   S 648/652-boe/Ha

Brennschneidmaschine mit Schallschutzvorrichtung

Die Erfindung betrifft eine Vorrichtung zum Teilen von aus einer Stranggießanlage austretenden Gießsträngen durch Brennschneiden, insbesondere zum Querteilen von Brammen, mit einer parallel zum Gießstrang mit Gießgeschwindigkeit verfahrbaren Brennschneidmaschine, die mindestens einen quer zum Gießstrang verschiebbaren und senkrecht verstellbaren Schneidbrenner umfaßt.

Der in Stranggießanlagen aus der gebogenen Strangführung austretende Gießstrang wird nach dem Umlenken in die Waagerechte üblicherweise derart mittels der Brennschneidmaschine in Teillängen aufgeteilt (DE-OS 2 262 949), daß zwei von verschiebbaren Brennerwagen getragene Schneidbrenner sich jeweils von außen einander nähernd zur Strangmitte hin verfahren werden, wenn der Gießstrang eine Bramme ist. Zum Gleichlauf von Brennern und Gießstrang wird die fahrbare Brennschneidmaschine über eine Klemmvorrichtung zeitweise von dem Strang mitgeschleppt.

Zunächst beim Zünden der Schneidbrenner und dann während der Dauer des gesamten Trennschnittes stellt sich beim Brennschneiden eine sehr hohe Geräuschentwicklung mit Werten von weit über 100 dB (A) ein, die zu einer erheblichen Lärmbelästigung für das Bedienungspersonal einer Stranggießanlage führt.

.../..

- 2 -

Der Erfindung liegt die Aufgabe zugrunde, die Lärmbelästigung ohne übermäßigen Aufwand an der Brennschneidmaschine zu reduzieren.

Nach der Erfindung wird diese Aufgabe dadurch gelöst, daß die Brennschneidmaschine auf der dem oder den Schneidbrennern zugewandten Seite mit Kuppelmitteln zum Ankuppeln eines als Wagen ausgebildeten kastenförmigen Schallschutzgehäuses versehen ist, das zumindest den Gießstrang auf seiner gesamten Breite überfaßt und dessen obere Deckplatte eine längliche Öffnung für die Querfahrt des oder der in Arbeitsstellung abwärts gesteuerten Brenner freiläßt. Gegenüber einer denkbaren Schallschutzverkleidung, die vollständig von der fahrbaren Brennschneidmaschine getragen ist, hat das gemäß der Erfindung ankuppelbare Schallschutzgehäuse den Vorteil, daß Brennschneidmaschinen nachträglich mit einem Schallschutz versehen werden können, wie auch die Lösbarkeit des als fahrbarer Wagen ausgeführten Schallschutzgehäuses die Zugänglichkeit zur Brennschneidmaschine nicht behindert. Bei nachträglichem Einbau stehen die Schienen zum Verfahren der Brennschneidmaschine für das fahrbare und ankuppelbare Schallschutzgehäuse zur Verfügung.

Es versteht sich, daß die Seitenwände sowie die Stirnwände des unten offenen, kastenförmigen Schallschutzgehäuses so weit nach unten reichen wie möglich. Dies bedeutet für die Stirnwände, daß diese zumindest mit Ausschnitten versehen sind, die einen Durchgang der größtmöglichen Abmessung des Gießstranges zulassen. Der Schallschutz im Bereich der stirnseitigen Wände kann jedoch erfindungsgemäß dadurch verbessert werden, daß die stirnseitigen Wände in eine Vielzahl von benachbarten schmalen Schwenkklappen aufgeteilt sind, die in senkrechter Hängelage bis etwas über die Ebene der den Gießstrang tragenden Rollgangsrollen reichen. Hierdurch wird erreicht, daß die sich über die Gießstrang-Breite erstreckenden Schwenkklappen sich unter Ausschwenken auf die Strangoberfläche legen, wogegen die außerhalb liegenden Schwenkklappen in ihrer Hängelage verbleiben, so daß das Innere des Schallschutzgehäuses stirnseitig unabhängig von der Strangbreite nahezu vollständig abgedichtet ist. Auf der gleichen Linie liegt der Vorschlag, die stirnseitigen Wände des Schallschutzgehäuses aus sog. Kettenschürzen zu bilden.

Der Schallschutz im Bereich der Seitenwände des Schallschutzgehäuses kann dadurch verbessert werden, daß diese Seitenwände mit ortsfesten senkrechten Stegen eine sog. Labyrinthdichtung bilden. Je nach der Anzahl der senkrechten Stege sowie der zwischen diese Stege mit bodenseitigem Luftabstand eingreifenden Seitenwänden in Mehrfachanordnung können Labyrinthdichtungen mit mehrfacherer Umlenkung der Schallwellen gebildet werden.

Um den Schallschutz im Bereich der länglichen Öffnung in der oberen Deckplatte des Schallschutzgehäuses zu verbessern, die wegen der Querfahrt der Schneidbrenner unerläßlich ist, wird gemäß der Erfindung empfohlen, daß diese längliche bzw. schlitzartige Öffnung von kanalartig hochgezogenen Blechen eingefaßt ist. Eine weitergehende Abdeckung dieser schlitzartigen Öffnung kann gemäß der Erfindung dadurch erhalten werden, daß beidseitig der Öffnung auf der Deckplatte waagerechte Bolzen angebracht sind, die zur drehbeweglichen Halterung von mehreren nebeneinander gereihten, sich gegenüberliegend nach oben spitzdachartig annähernden und gegen den oder die Brenner zur Anlage kommenden Schutzblechen dienen, und daß die Schutzbleche an den oberen Kanten in den Eckbereichen Einfahrschrägen aufweisen. Bei einer derartigen Ausgestaltung wird die schlitzartige Öffnung der Deckplatte durch die ein Dach bildenden Schutzbleche haubenartig zugedeckt, wobei die Brenner beim Verfahren immer je zwei der Schutzbleche auseinanderdrücken, was durch die Einfahrschrägen erleichtert wird. Die Schutzbleche, die mit dem Brenner nicht in Kontakt sind, verschließen währenddessen die schlitzartige Öffnung auf der restlichen Teillänge vollständig.

- 4 -

Soweit bisher beschrieben, wird durch das ankuppelbare Schallschutzgehäuse die durch den oder die Brenner verursachte Lärmbelästigung im wesentlichen durch eine Einkapselung der Brenner selbst in Strangnähe reduziert, wenn diese abgesenkt und in Schneidposition sind. Wird zur Optimierung des Schallschutzes gefordert, möglichst viele Teile der Brennschneidmaschine einzukapseln, ohne daß deren Zugänglichkeit darunter leidet, so kann das an die Brennschneidmaschine ankuppelbare Schallschutzgehäuse gemäß der Erfindung mit einem zur Brennschneidmaschine hin offenen Aufbau versehen werden, in den beim Ankuppeln des Schallschutzgehäuses bzw. -wagens an die Brennschneidmaschine deren Brennerkopf in seiner höchsten Position einfahrbar ist, wobei die offene Seite des Aufbaues mit einer von der Brennschneidmaschine getragenen Stirnwand korrespondiert, derart, daß die offene Seite durch das Ankuppeln des Schallschutzwagens an die Brennschneidmaschine verschließbar ist. Diese maschinenseitige Stirnwand hindert die Zugänglichkeit der Brennschneidemaschine bei abgekuppeltem Schallschutzwagen nebst Aufbau nicht, jedoch ergibt sich beim Ankuppeln des Schallschutzgehäuses, daß der gesamte Brennerkopf unter Verschluß der offenen Seite des Aufbaues eingekapselt ist, d. h. außer der eigentlichen Lärmquelle noch ein großer Teil des Umfeldes. Nach den Patentansprüchen 8 bis 10 können auf der Brennschneidmaschine weitere Wandteile angeordnet werden, die sich beim Heranfahren des Schallschutzgehäuses mit dessen Wandteilen überlappen oder deren Wandteile verlängern.

Wie allgemein bekannt, sind die Schallschutzwände der erfindungsgemäßen Vorrichtung zweckmäßig mit schalldämmenden Mitteln zu belegen.

In der Zeichnung sind zwei Ausführungsbeispiele des Erfindungsgegenstandes dargestellt, und zwar zeigen

Fig. 1 die schematische Darstellung einer Brennschneidmaschine mit Schallschutz für den unmittelbaren Schneidbereich,

Fig. 2 einen Schnitt entlang der Linie I-I, in Fig. 1,

Fig. 3 die spitzdachartigen Blechabdeckungen der
schlitzartigen Öffnung in der Deckplatte, in Seitenansicht,

Fig. 4 eine Draufsicht der Fig. 3,

Fig. 5 ein Ausführungsbeispiel mit schallisolierendem
Aufbau im senkrechten Schnitt, und

Fig. 6 einen senkrechten Schnitt entlang der Linie
VI-VI in Fig. 5.

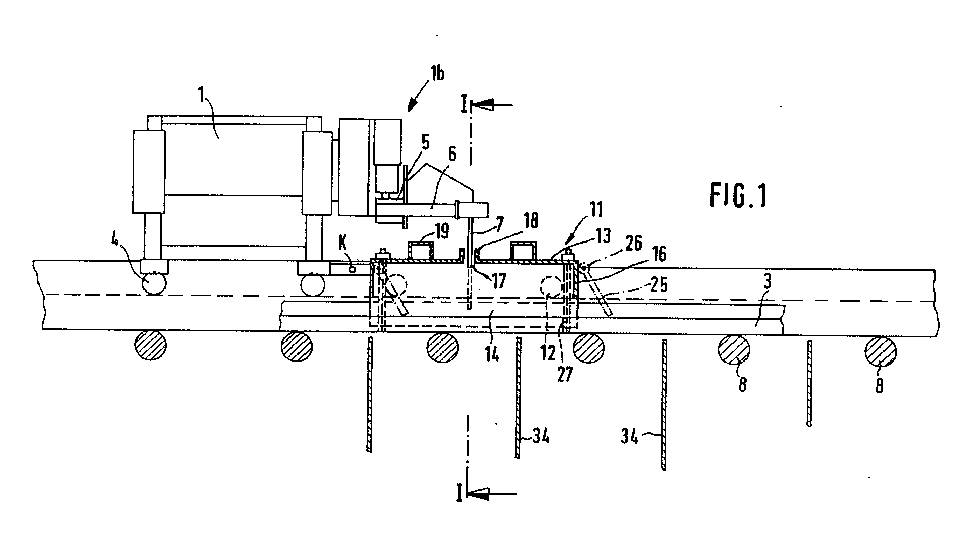

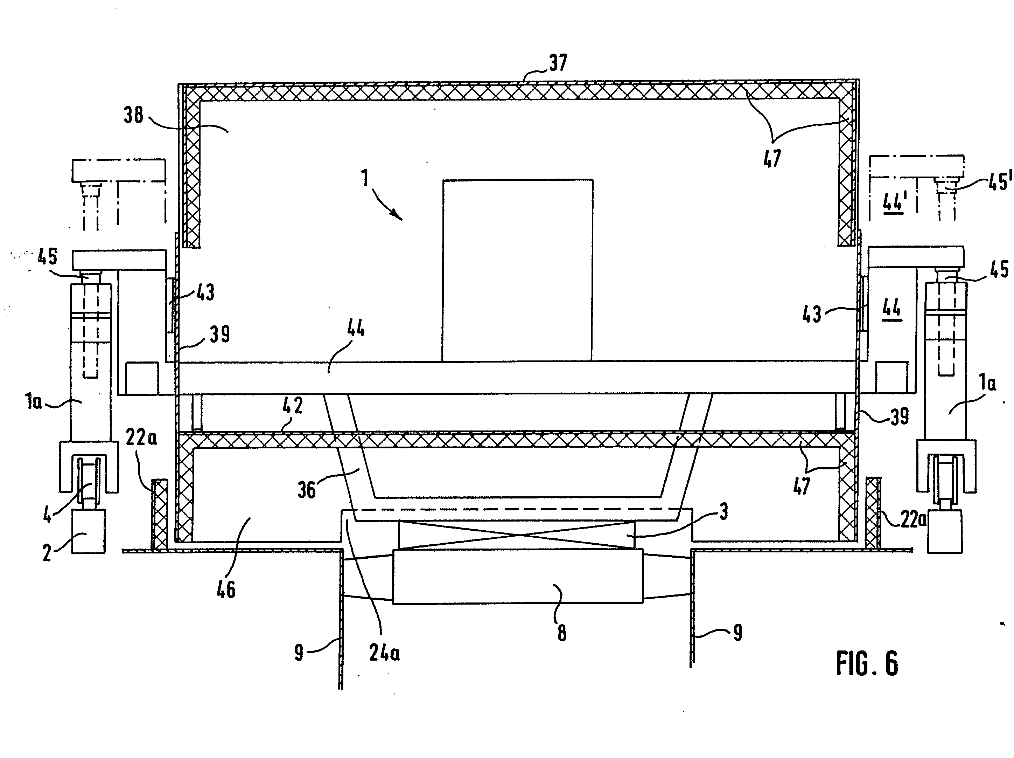

Bei dem in Fig. 1 bis 4 dargestellten Ausführungsbeispiel
ist eine Brennschneidmaschine 1 auf Schienen 2 oberhalb und
parallel zu einem aus einer nicht dargestellten Stranggießanlage austretenden Gießstrang 3 mittels der Räder 4 verfahrbar, wobei die Brennschneidmaschine 1 zur Synchronisation der Geschwindigkeiten mittels einer Klemmvorrichtung
mit dem Strang 3 verbunden und somit von diesem mitgeschleppt werden kann. Die Klemmvorrichtung wird später in
Verbindung mit Fig. 6 erläutert. Die Brennschneidmaschine 1
trägt einen Brennerkopf 1b, der einen höhenverstellbaren
Brennerbalken 5 umfaßt, auf dem zwei verschiebbare Brennerwagen 6 angeordnet sind. Die Brennerwagen 6 sind mit je
einem Schneidbrenner 7 bestückt, mit denen die einzelnen
Brammen von dem Gießstrang 3 abgetrennt werden, der auf
einem aus Rollen 8 gebildeten Rollgang kontinuierlich vorgeschoben wird. Unterhalb des Rollganges befindet sich ein
von senkrechten Blechen 9 gebildeter Brennkanal, durch den
der beim Brennschneiden entstehende Abfall herabfällt. Dies
alles ist bekannt.

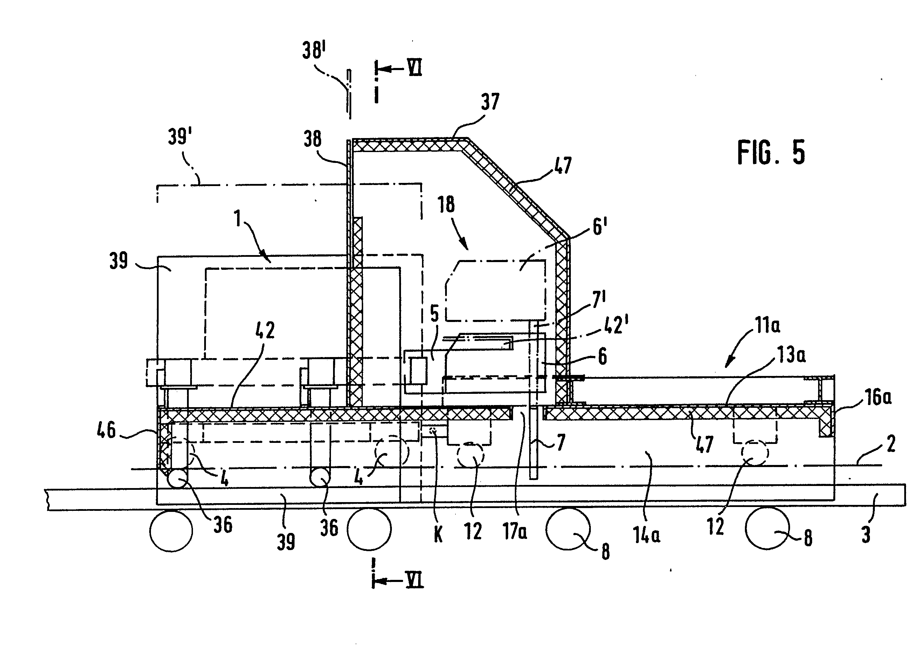

Wie Fig. 1 (und auch Fig. 5) zeigen, ist die Brennschneidmaschine auf der den Schneidbrennern zugewandten Seite mit einer schematisch angedeuteten Kupplung K versehen, mit der ein als Wagen ausgebildetes, kastenförmiges Schallschutzgehäuse 11 an die Brennschneidmaschine 1 angekuppelt werden kann. Das Schallschutzgehäuse 11 ist mit seinen Rädern 12 auf den vorhandenen Schienen 2 für die Brennschneidmaschine 1 verfahrbar und besteht aus der Deckplatte 13, den Seitenwänden 14 und 15 sowie den Stirnwänden 16. Das Schallschutzgehäuse 11 ist somit nach unten offen und umfaßt den Gießstrang auf seiner gesamten Breite. Es ist im Ausführungsbeispiel nach Fig. 1 bis 4 sehr flach gehalten und in der Höhe so bemessen, daß sich die Brenner 7 in abgesenkter Stellung nahezu vollständig in dem Schallschutzgehäuse 11 befinden. Zum Eintritt in das Schallschutzgehäuse 11 und zur Querfahrt der Brenner 7 weist die Deckplatte 13 eine quer verlaufende längliche Öffnung 17 auf, die zur zusätzlichen Schalldämmung zu beiden Seiten noch von kanalartig hochgezogenen Blechen 18 eingefaßt ist. An der Oberseite des Schallschutzgehäuses 11 sind Rauchgasabsaugungen 19 vorgesehen.

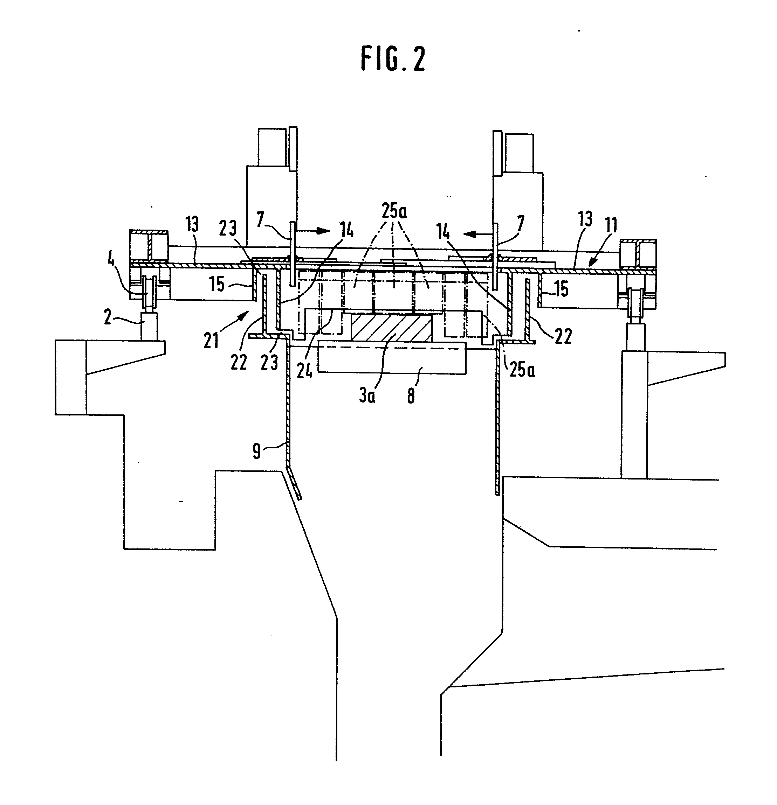

Die stirnseitigen Wände 16, durch die der Gießstrang 3 in das Schallschutzgehäuse 11 ein- und austritt, sind - wie Fig. 2 zeigt - mit Aussparungen 24 versehen, die der größten Strangabmessung angepaßt sind, was aber bei kleineren Strangabmessungen mitunter zu freien Öffnungen für den Schallaustritt führt. In Fig. 1 und 2 ist daher als Variante für die stirnseitigen Wände 16 eine Vielzahl von benachbarten schmalen Schwenkklappen 25a strichpunktiert dargestellt, die in senkrechter Hängelage bis etwas über die Ebene der den Gießstrang tragenden Rollgangsrollen 8 reichen. Diese Schwenkklappen sind um Bolzen 26 schwenkbar gelagert. Wie Fig. 2 zu entnehmen ist, werden bei einer kleineren Strangbreite von dem durchlaufenden Strang 3a nur die Einzelklappen 25a verschwenkt, die der Breite dieses Stranges entsprechen.

Die anderen, nicht mit dem Strang 3a in Berührung kommenden Schwenkklappen 25a werden nicht verschwenkt und bleiben in Hängelage, womit ein nahezu lückenloser Stirnabschluß für das Schallschutzgehäuse 11 erreicht wird. Zusätzlich oder in Ersatz der Schwenkklappen 25 können stirnseitig noch sog. Kettenschürzen 27 (Fig. 1) vorgesehen werden. Es ist einleuchtend, daß die mit Aussparungen 24 versehenen Stirnwände 16 in der Praxis durch die Einzel-Schwenkklappen 25 und/oder die Kettenschürzen 27 ersetzt werden. Die Ausbildung des stirnseitigen Abschlusses des Schallschutzgehäuses 11 ist selbstverständlich auch bei dem Ausführungsbeispiel nach Fig. 5 und 6 anwendbar, dort aber nicht dargestellt.

Zur Verbesserung der Schalldämmung im Bereich der Seitenwände 14 ist je eine eine Labyrinthdichtung 21 bildende Wandanordnung vorgesehen, wozu jeweils zwischen einer inneren und einer äußeren Seitenwand 14 bzw. 15 des Schallschutzgehäuses 11 ein z. B. mit den den Brennkanal bildenden Blechen 9 oder auch mit dem Rollgangsrahmen verbundener ortsfester Steg 22 angeordnet ist. In dem Labyrinth 21, das durch die ineinandergreifenden Wände 14, 15 und 22 freie Querschnitte 23 für den Schall läßt, soll sich der Schall sozusagen aufzehren, was noch durch Ausfüllen des Labyrinths 21 mit schalldämmenden Materialien gefördert werden kann, wobei die Seitenwände 14, 15 bis an den stationären Steg 22 dick belegt sind. Überhaupt sind alle Bleche und Wandteile des Schallschutzgehäuses 11 mit zusätzlichen schalldämmenden und hitzebeständigen Belägen zu versehen.

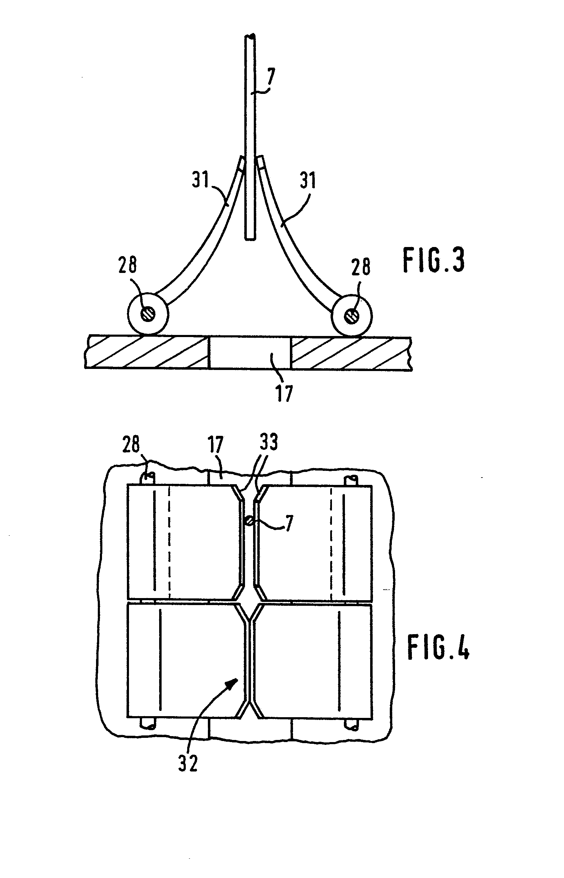

Um die schlitzartige Öffnung 17 für die Schneidbrenner 7, die grundsätzlich möglichst schmal gehalten werden sollte, nach außen hin noch wirkungsvoller gegen Schalldurchtritt einzugrenzen, sind nach Fig. 3 und 4 beidseitig der schlitzartigen Öffnung 17 waagerecht verlaufende Bolzen 28 angebracht.

Auf jedem Bolzen ist eine Reihe von einander benachbarten Schutzblechen 31 schwenkbar geführt, die gegeneinander zur Anlage kommen und spitzdachartige Abdeckungen 32 bilden. An den oberen Kanten sind die Schutzbleche 31 in den Eckbereichen mit Einfahrschrägen 33 ausgestattet, so daß die Brenner 7 bei ihrer Querbewegung störungsfrei von einem Schutzblechpaar in das andere bewegt werden können, wobei je ein gegenüberliegendes Paar von Schutzblechen 31 auseinandergezwängt wird, die anderen Schutzbleche jedoch in ihrer spitzdachartigen Abdeckung 32 geschlossen verbleiben.

Wie Fig. 1 zeigt, können im Schneidbereich zwischen den Rollgangsrollen 8 mehrere senkrechte Schottwände 34 vorgesehen werden, die den nach unten aus dem Schallschutzgehäuse 11 austretenden Schall weiterleiten und durch Reflektion schalldämmend beeinflussen.

In Fig. 5 und 6 sind die Brennschneidmaschine 1 sowie die Schienen 2 und der Brennerkopf 1b nur schematisch angedeutet. Der Brennerkopf umfaßt einen höhenverstellbaren Brennerbalken 5, auf dem zwei verschiebbare Brennerwagen 6 mit den Schneidbrennern 7 angeordnet sind. Die hintereinander liegenden Brennerwagen 6 mit den Brennern 7 sind in Fig. 5 mit vollausgezogenen Linien in der abwärtsgesteuerten Arbeitsstellung zum Querschneiden des Stranges 3 dargestellt.

Die Brennschneidmaschine 1 ist wiederum mittels einer Kupplung K mit einem kastenartigen, nach unten offenen Schallschutzgehäuse 11a verbunden. Über die Räder 12 ist das Schallschutzgehäuse 11a auf den Schienen 2 der Brennschneidmaschine verfahrbar und besteht aus der Deckplatte 13a, den Seitenwänden 14a sowie einer stirnseitigen Wand 16a. Das Schallschutzgehäuse 11a trägt an seinem vorderen, der Brennschneidmaschine zugewandten Ende einen zur Brennschneidmaschine 1 hin offenen Aufbau 37, in den beim Ankuppeln des Schallschutzgehäuses an die Brennschneidmaschine deren Brennerkopf 1b in seiner höchsten Position einfahrbar ist. Diese höchste Position ist durch die strichpunktiert angedeutete

.../..

Lage der Brennerwagen 6 dargestellt. Die offene Seite des Aufbaues 37 ist von einer mit der Öffnung korrespondierenden Stirnwand 38 im Kuppelzustand verschlossen, die von der Brennschneidmaschine 1 getragen ist. Da die Seitenwände des Aufbaues 37 im Bereich der Schnittführung nach der Linie VI-VI entsprechend Fig. 6 aus konstruktiven Gründen nicht bis zur Höhenebene der Deckplatte 13a heruntergezogen werden können, übernehmen den seitlichen Schallschutz zwei sich in Fahrtrichtung erstreckende Wandteile 39, die an den beiden Rändern der Stirnwand 38 befestigt sind und die die Seitenwände des Aufbaues 37 im Bereich dessen offener Seite teilweise überlappen. Wie Fig. 6 zeigt, reichen die Wandteile 39 soweit abwärts wie möglich und bilden - ebenso wie die mit ihnen fluchtenden Seitenwände 14a des Schallschutzgehäuses 11a - mit den senkrechten ortsfesten Stegen 22a eine Labyrinthdichtung.

Die seitlichen Wandteile 39 sind durch eine Querwand 42 verbunden, die mit der Deckwand 13a des Schallschutzgehäuses 11a fluchtet und mit dieser die Öffnung 17a für die Querfahrt der Brenner 7 bildet. Die Querwand 42 mit den unteren Bereichen der seitlichen Wände 39 sowie der Stirnwand 46 bilden somit das eigentliche flache Schallschutzgehäuse 11a mit dem Unterschied gegenüber dem Ausführungsbeispiel nach Fig. 1 und 4 dahingehend, daß die Teile 39, 42 und 46 von der Brennschneidmaschine getragen sind, im Kuppelzustand jedoch im Sinne eines sich auch über den Bereich der Brennschneidmaschine erstreckenden, nach unten offenen Schallschutzgehäuses zusammenwirken.

Diese der Brennschneidmaschine 1 zugeordneten, mit dem Aufbau 37 des Schallschutzgehäuses 11a korrespondierenden Wandteile 38, 39, 42, 46 sind von einer höhenverstellbaren Traverse 44 der Brennschneidmaschine getragen, in dem die Wände 39 über Verbindungsstücke 43 mit den aufwärtsgerichteten Teilen der Traverse 44 verbunden sind.

Die Traverse liegt beiderseits der Brennschneidmaschine 1 auf Verstelleinrichtungen 45 auf, die bis in die Pos. 45' in der Höhe verstellt werden können (Fig. 6). Hat die Traverse die Position 44', so sind alle mit der Traverse verbundenen Teile hochgesteuert, was in Fig. 1 mit 38', 39' 42' angedeutet ist. Die Verstelleinrichtungen 45 sind in dem Rahmen 1a der Brennschneidmaschine 1, der auch die Laufrollen 4 trägt, angeordnet.

Es wird nunmehr klar, daß der Verstellbereich für die Traverse 44 die Aussparungen in den Seitenwänden des Aufbaues 37 fordert, die durch die Wandteile 39 überlappend abgedeckt werden. Über die Höhenverstellbarkeit der Traverse wird auch die bereits erwähnte Verklemmung der Brennschneidmaschine 1 mit dem sich bewegenden Gießstrang 3 bewirkt, indem nämlich mit der Traverse 44 abwärtsgerichtete Kufen 36 verbunden sind, die sich auf die Oberfläche des Gießstranges 3 unter dem Gewicht der höhenverstellbaren Teile aufsetzt. In Fig. 1 erkennt man zwei auf den Gießstrang 3 aufgesetzte Kufen 36.

Wie bereits erwähnt, können die stirnseitigen Wände 16a und 46 mit Ausschnitten 24a versehen oder durch Schwenkklappen 25a bzw. Kettenschürzen 27 ersetzt sein. Ferner zeigen Fig. 5 und 6 die schalldämmenden und hitzebeständigen Beläge 47 an den Innenseiten von durch den Schall beaufschlagten Wandteilen.

- 1 -

Ansprüche                    S 648/652
                             Boe-Ha

1. Vorrichtung zum Teilen von aus einer Stranggießanlage austretenden Gießsträngen (3) durch Brennschneiden, insbesondere zum Querteilen von Brammen, mit einer parallel zum Gießstrang mit Gießgeschwindigkeit verfahrbaren Brennschneidmaschine (1), die mindestens einen quer zum Gießstrang verschiebbaren und senkrecht verstellbaren Brenner (7) umfaßt, dadurch gekennzeichnet, daß die Brennschneidmaschine auf der dem oder den Schneidbrennern zugewandten Seite mit Kuppelmitteln (K) zum Ankuppeln eines als Wagen ausgebildeten kastenförmigen Schallschutzgehäuses (11, 11a) versehen ist, das zumindest den Gießstrang auf seiner gesamten Breite überfaßt und dessen obere Deckplatte (13, 13a, 42) eine längliche Öffnung (17, 17a) für die Querfahrt des oder der in Arbeitsstellung abwärts gesteuerten Brenner freiläßt.

2. Vorrichtung nach Anspruch 1, dadurch gekennzeichnet, daß die stirnseitigen Wände des Schallschutzgehäuses (11) in eine Vielzahl von benachbarten schmalen Schwenkklappen (25a) aufgeteilt sind, die in senkrechter Hängelage bis etwas über die Ebene der den Gießstrang tragenden Rollgangsrollen (8) reichen.

3. Vorrichtung nach Anspruch 1, dadurch gekennzeichnet, daß die stirnseitigen Wände des Schallschutzgehäuses (11) aus sog. Kettenschürzen (27) bestehen.

4. Vorrichtung nach Anspruch 1, dadurch gekennzeichnet, daß die Seitenwände (14) des Schallschutzgehäuses (11) mit ortsfesten senkrechten Stegen (22, 22a) eine Labyrinthdichtung (21) bilden.

5. Vorrichtung nach Anspruch 1, dadurch gekennzeichnet, daß die längliche Öffnung (17) für die Querfahrt des oder .der Brenner (7) von kanalartig hochgezogenen Blechen (18) eingefaßt ist.

6. Vorrichtung nach Anspruch 1, dadurch gekennzeichnet, daß beidseitig der länglichen Öffnung (17) auf der Deckplatte (13) waagerecht verlaufende Bolzen (28) angebracht sind, die zur drehbeweglichen Halterung von mehreren nebeneinander gereihten, sich gegenüberliegend nach oben spitzdachartig annähernden und gegen den oder die Brenner (7) zur Anlage kommenden Schutzblechen (31) dienen, und daß die Schutzbleche an den oberen Kanten in den Eckbereichen mit Einfahrschrägen (33) versehen sind.

7. Vorrichtung nach Anspruch 1, dadurch gekennzeichnet, daß das ankuppelbare Schallschutzgehäuse (11a) einen zur Brennschneidmaschine (1) in offenen Aufbau (37) trägt, in den beim Ankuppeln des Schallschutzgehäuses an die Brennschneidmaschine deren Brennerkopf (1b) in seiner höchsten Position einfahrbar ist, und daß die offene Seite des Aufbaues mit einer von der Brennschneidmaschine getragenen Stirnwand (38) korrespondiert, derart, daß die offene Seite durch das Ankuppeln des Schallschutzgehäuses (11a) an die Brennschneidmaschine verschließbar ist (Fig. 5 und 6).       .../..

8. Vorrichtung nach Anspruch 7, dadurch gekennzeichnet, daß die Stirnwand (38) an ihren beiden Rändern mit sich in Fahrtrichtung erstreckenden Wandteilen (39) verbunden ist, die die Seitenwände des Aufbaues (37) im Bereich dessen offener Seite teilweise überlappen.

9. Vorrichtung nach Anspruch 8, dadurch gekennzeichnet, daß die seitlichen Wandteile (39) durch eine Querwand (42) verbunden sind, die mit der Deckwand (13a) des Schallschutzgehäuses (11a) fluchtet und mit dieser die Öffnung (17a) für die Querfahrt des oder der Brenner (7) bildet.

10. Vorrichtung nach Anspruch 9, dadurch gekennzeichnet, daß die der Brennschneidmaschine (1) zugeordneten, mit dem Aufbau (37) des Schallschutzgehäuses (11a) korrespondierenden Wandteile (38, 39, 42, 46) von einer höhenverstellbaren Traverse (44) der Brennschneidmaschine (1) getragen sind, über deren abwärts gerichtete Kufen (36) die Brennschneidmaschine mit dem Gießstrang (3) zum gemeinsamen Vorschub verklemmt werden kann.

FIG.1

FIG. 2

7

31      31

28      28      **FIG.3**

17

28    17    33

7

**FIG.4**

32

FIG. 5

FIG. 6

0051250

Europäisches
Patentamt

**EUROPÄISCHER RECHERCHENBERICHT**

Nummer der Anmeldung

EP 81 10 8998.6

| Kategorie | EINSCHLÄGIGE DOKUMENTE Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| X | DE - A1 - 2 836 958 (MESSER GRIESHEIM) <br> * Ansprüche 1,3,8 * <br> & GB - A - 2 028 702 <br> -- | 1,2,5 | B 22 D 11/126 <br> B 23 K 7/10 |
| A,D | DE - A - 2 262 949 (K. BANGE) <br> * Anspruch 1 * <br> ---- | 1 | |

RECHERCHIERTE SACHGEBIETE (Int. Cl.³)

B 22 D 11/00
B 23 K 7/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 25-01-1982 | GOLDSCHMIDT |

EPA form 1503.1 06.78